(19) Europäisches Patentamt / European Patent Office / Office européen des brevets

(11) **EP 1 733 181 B2**

(12) **NOUVEAU FASCICULE DE BREVET EUROPEEN**
Après la procédure d'opposition

(45) Date de publication et mention de la décision concernant l'opposition:
**05.03.2014 Bulletin 2014/10**

(45) Mention de la délivrance du brevet:
**24.02.2010 Bulletin 2010/08**

(21) Numéro de dépôt: **05753793.8**

(22) Date de dépôt: **05.04.2005**

(51) Int Cl.:
**G01B 11/00** *(2006.01)*

(86) Numéro de dépôt international:
**PCT/FR2005/000827**

(87) Numéro de publication internationale:
**WO 2005/100908 (27.10.2005 Gazette 2005/43)**

(54) **PALPEUR MIXTE, OPTIQUE ET MECANIQUE ET PROCEDE DE RECALAGE Y AFFERANT**

GEMISCHER OPTISCHER UND MECHANISCHER SENSOR UND DAZUGEHÖRIGES RÜCKSETZVERFAHREN

MIXED OPTICAL AND MECHANICAL SENSOR AND ASSOCIATED RESETTING METHOD

(84) Etats contractants désignés:
**AT BE BG CH CY CZ DE DK EE ES FI FR GB GR HU IE IS IT LI LT LU MC NL PL PT RO SE SI SK TR**

(30) Priorité: **06.04.2004 FR 0403621**

(43) Date de publication de la demande:
**20.12.2006 Bulletin 2006/51**

(73) Titulaire: **Kreon Technologies**
**87069 Limoges Cedex (FR)**

(72) Inventeur: **GARUET-LEMPIROU, Jean-Claude**
**F-87570 Rilhac Rancon (FR)**

(74) Mandataire: **Debay, Yves et al**
**Cabinet Debay**
**126 Elysée 2**
**78170 La Celle Saint Cloud (FR)**

(56) Documents cités:
WO-A-02/25206       DE-A- 4 327 250
DE-A- 19 639 780    US-A- 5 955 661

EP 1 733 181 B2

**Description**

La présente invention concerne un palpeur mixte, optique et mécanique et le procédé de recalage y afférant.

Il est connu dans l'art antérieur deux types de palpeurs : des palpeurs uniquement optiques ou des palpeurs uniquement mécaniques.

Les palpeurs optiques permettent de numériser très rapidement une surface mais le rendu est peu précis. En effet, les palpeurs optiques présentent systématiquement une perte de précision. Cette perte de précision vient essentiellement de la technologie employée par l'appareil, ainsi que de l'étape d'étalonnage qui précède chacune des mesures effectuées par l'appareil.

Les palpeurs mécaniques quant à eux sont très précis mais ceci se traduit par une certaine lenteur lors de la prise de mesures. Dans certains domaines d'utilisation des palpeurs, comme par exemple celui du design automobile, il n'est pas nécessaire de connaître la surface numérisée avec une grande précision, mais il est souhaitable que la numérisation soit la plus rapide possible. Dans ces conditions, le palpeur optique semblerait la meilleure solution puisqu'il propose une numérisation rapide. Toutefois, bien que certaines mesures ne nécessitent pas une connaissance précise de la surface numérisée, le palpeur optique n'offre pas une précision suffisamment intéressante. Ceci est dû au fait que les palpeurs optiques créent une perte de précision comme il a été dit plus haut. C'est l'une des raisons pour lesquelles les palpeurs mécaniques sont toujours utilisés dans des domaines dont la classe de précision rendrait pourtant l'usage des palpeurs optiques possibles.

La présente invention a pour but de pallier certains inconvénients d e l'art antérieur en proposant un palpeur qui soit à la fois un palpeur optique et un palpeur mécanique, le palpeur mécanique servant à moyenner les pertes de précision du palpeur optique. L'utilisateur pourra ainsi bénéficier de la rapidité de numérisation du palpeur optique tout en bénéficiant d'une meilleure précision grâce à la correction apportée par le palpeur mécanique.

Ce but est atteint par un palpeur mixte selon la revendication 1.

Un autre but est atteint par le procédé selon la revendication 10.

D'autres particularités et avantages de la présente invention apparaîtront plus clairement à la lecture de la description ci-après, faite en référence aux dessins annexés, dans lesquels :

- la figure 1 représente une vue générale du palpeur mixte selon l'invention,
- la figure 2 représente le palpeur mixte selon l'invention en fonctionnement ainsi que la délimitation du champ de vision de la caméra du capteur optique,

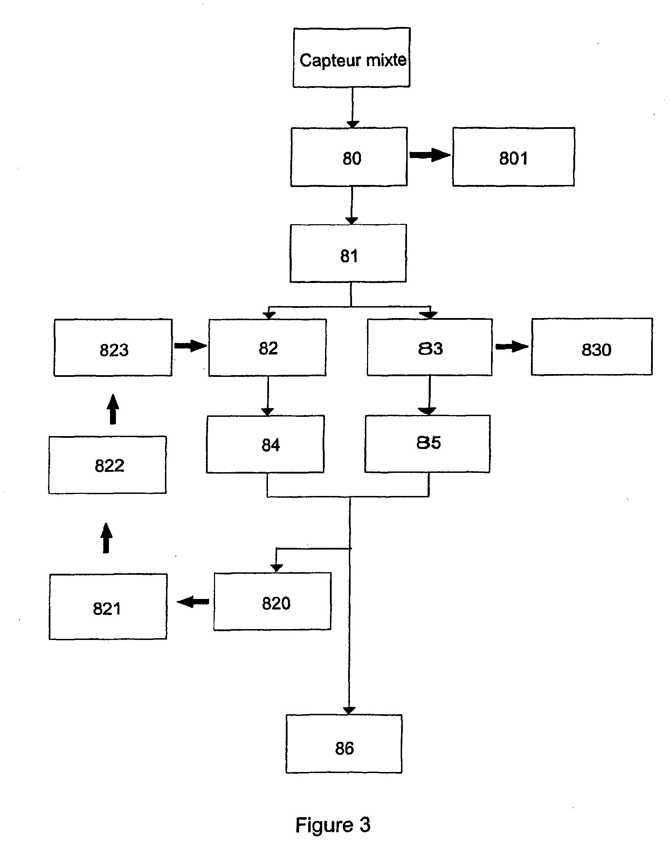

- la figure 3 représente l'organigramme de fonctionnement du procédé de recalage selon l'invention,

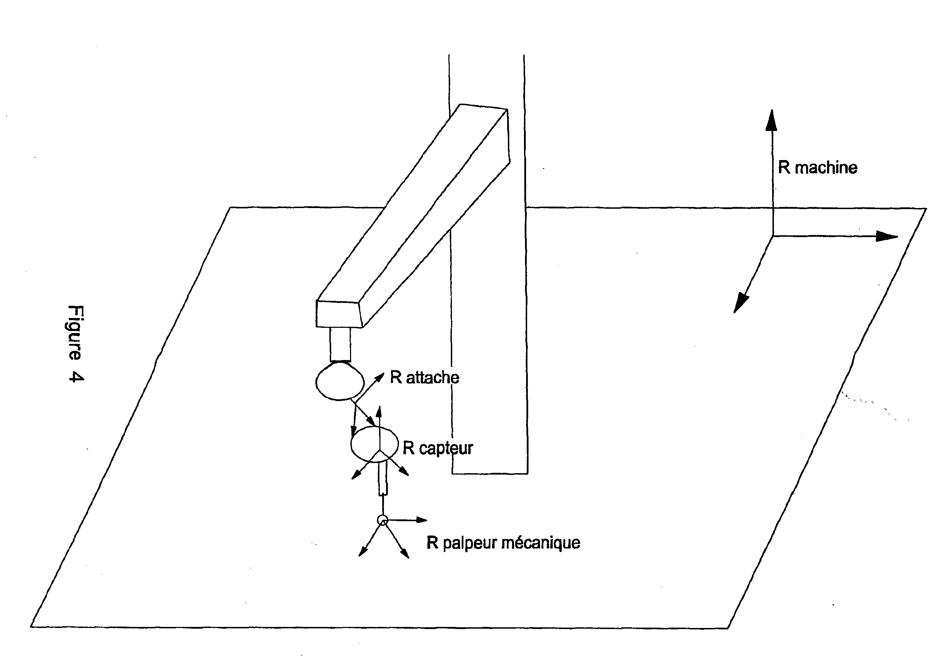

- la figure 4 représente le palpeur mixte fixé sur un bras manipulateur, les différents référentiels mis en jeu étant représentés,

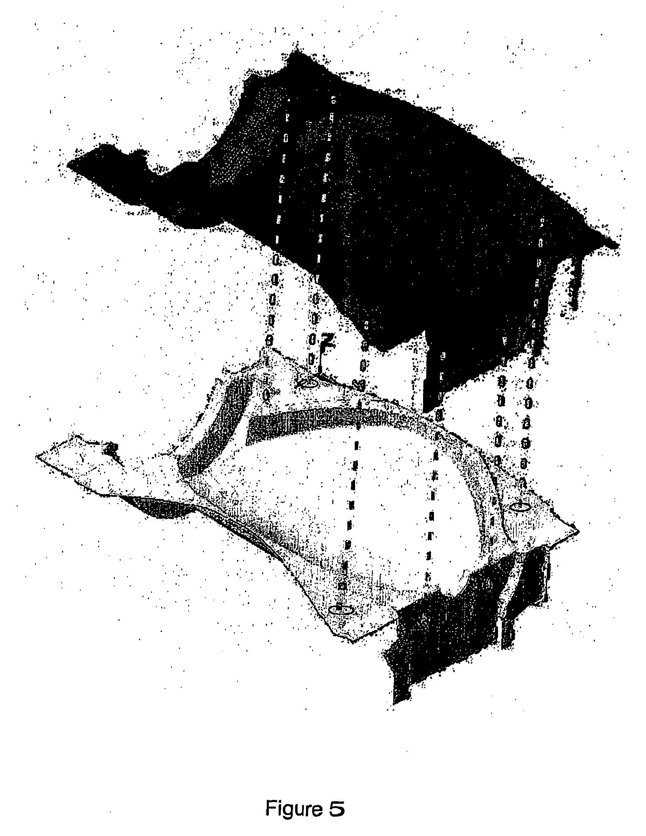

- la figure 5 représente une étape de la comparaison des référentiels issus de la mesure mécanique et de la mesure optique,

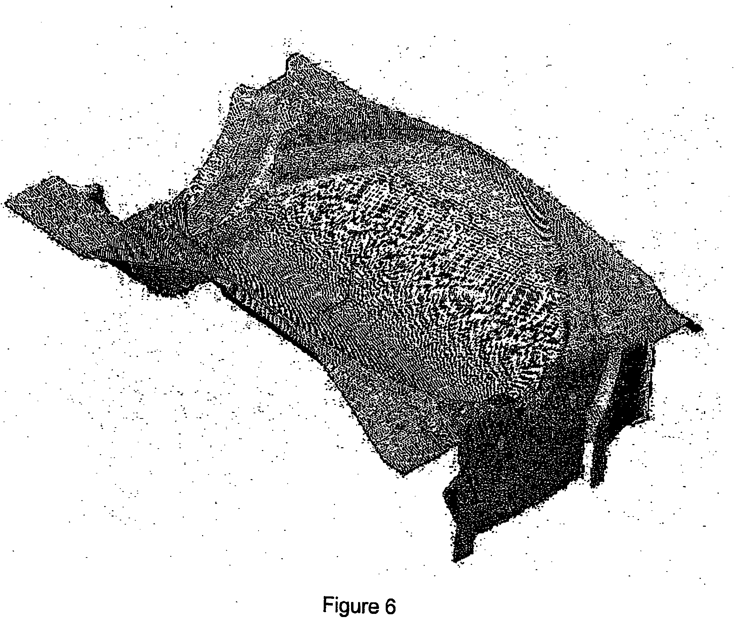

- la figure 6 représente l'ajustement des deux référentiels une fois la comparaison effectuée.
- L'annexe 1 représente les produits matriciels qui permettent les changements de référentiels nécessaires pour l'obtention des mesures exploitables par l'utilisateur.

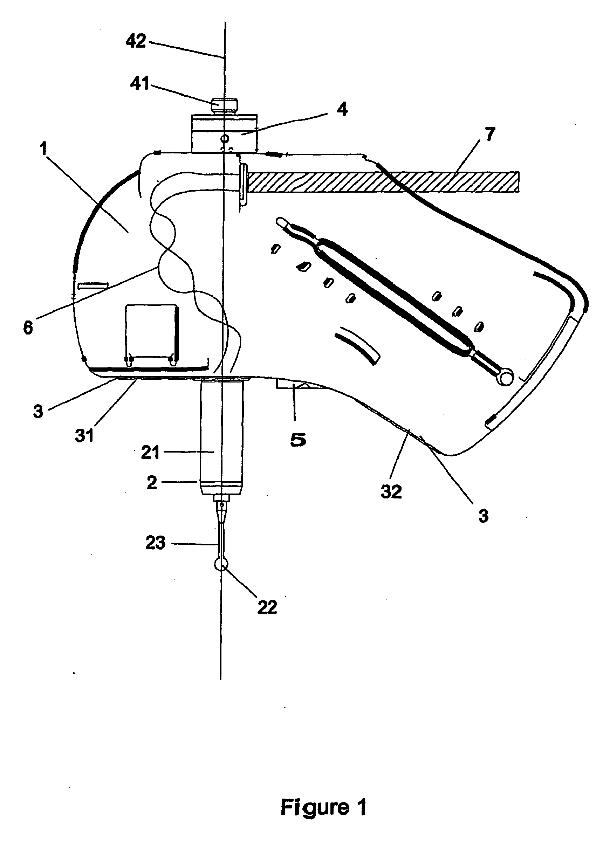

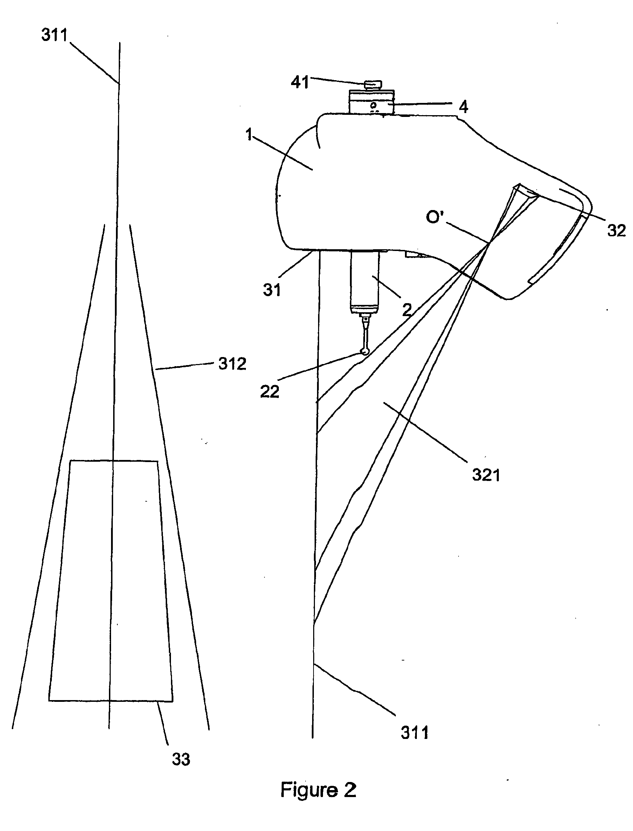

L'invention concerne un palpeur de surfaces mixte. Ce palpeur mixte comporte un boîtier (1) supportant un palpeur mécanique (2) ainsi qu'un palpeur optique (3). Le boîtier possède une attache (4) qui a pour rôle de fixer le palpeur mixte selon l'invention, par le biais d'un moyen d'attachement (41) sur l'axe d'attache (42) du bras manipulateur d'une machine permettant des déplacements tridimensionnels (non représentées sur les figures 1 et 2). L'axe de l'attache (42) se confond avec l'axe de révolution de l'attache (4) qui est aussi celui du moyen d'attachement (41). Le palpeur mécanique (2) comporte de façon connue un attachement cylindrique (21) qui se prolonge par une touche cylindrique (23) laquelle porte une bille (22) en rubis. La bille (22) est sertie sur la touche (23. La bille (22) peut numériser et mesurer par contact tous les détails de la surface de la pièce à mesurer par la mémorisation au moment du contact des signaux de déplacement d'un bras manipulateur déplaçant le capteur. L'axe de l'attache (42) est parallèle et coplanaire avec l'axe de révolution de l'attachement (21) du palpeur mécanique (2) ainsi qu'avec celui de la touche (23) qui le prolonge. L'axe de l'attache (42) passe par le centre de la bille (22). Le palpeur mécanique (2) et l'attache (4) sont, tous deux, parallèles et coplanaires à l'axe d'attache (42). Le palpeur optique comporte une source laser (31) composée d'au moins un laser, une caméra (32), par exemple une matrice photosensible et une optique. Le faisceau (311) issu de la source laser (31) délimite un plan dit plan laser (312). L'optique est placée devant la matrice de la caméra (32). La distance qui sépare la caméra (32) de l'optique est telle que l'intersection de la surface de la pièce à numériser avec le faisceau laser (311) qui a lieu dans le plan laser (312) aura une image nette sur matrice photosensible (32). L'image de la matrice de la caméra (32) à travers l'optique est un parallélépipède, ce qui implique que le champ de vision de la caméra (32) à travers l'optique est un cône de section pyramidale dont la base est le parallélépipède image de la matrice de la caméra (32) à travers l'optique et le sommet est le centre optique (O').

Dans un mode de réalisation préféré, le boîtier du palpeur mixte a une forme particulière. En effet, il est coudé dans sa partie médiane, de sorte qu'il présente une forme de haricot. Le palpeur mécanique (2), et l'attache (4), se situent dans la partie du boîtier du palpeur mixte qui est dans un plan sensiblement perpendiculaire à l'axe de l'attache (42), ce plan est horizontal lorsque le palpeur mixte est au repos, l'autre partie du boîtier étant légèrement inclinée en direction de la bille (22). La source laser (31) se situe en amont du palpeur mécanique (2) de sorte que celui-ci est compris entre la source laser (31) et le coude du boîtier (1). La source laser (31) est, elle aussi, située dans la partie du boîtier du palpeur mixte qui est horizontale lorsque le palpeur mixte est au repos. La caméra (32) se situe dans la partie inclinée du boîtier du palpeur mixte. Dans le coude du boîtier du palpeur mixte, se situe un spot (5). De manière plus générale, le plan laser (312) et la perpendiculaire à la caméra (32) passant parle point optique (O) sont sécants. Les câbles de transmission des signaux de mesure (6) du palpeur mécanique (2) sortent du boîtier (1) soit par le biais de l'attache (4) soit, dans un autre mode de réalisation de l'invention, par le biais d'un câble (7) situé dans la partie supérieure du boîtier du palpeur mixte. Le câble (7) est orienté pour être sensiblement perpendiculaire à l'axe de l'attache (42) pour ne pas restreindre les mouvements du palpeur mixte.

La machine permettant les déplacements tridimensionnels permet à l'utilisateur de connaître à chaque instant la position dans un espace tridimensionnel du palpeur mixte selon l'invention. Cette machine tridimensionnelle, connue de l'art antérieur, permet également de piloter le palpeur mécanique (2) par le biais de logiciels de métrologie connus. Le fait que le palpeur mécanique (2) et l'arbre de l'attache (4) soient parallèles entre eux permet au palpeur mixte selon l'invention de pouvoir être commandé par des logiciels de métrologie classiques. En effet, les logiciels de métrologie classiques ne sont conçus que pour piloter des palpeurs mécaniques dont le centre de la bille (22) est confondu avec l'axe de l'attachement qui les porte. Le palpeur mécanique (2) est associé à des capteurs qui permettent de détecter le contact de la bille (22) avec la pièce à mesurer, ce sont par exemple des capteurs à rupture de contact.

Le palpeur mixte selon l'invention doit permettre la numérisation simultanée d'un même objet par le palpeur optique et par le palpeur mécanique. C'est pourquoi, la source laser (31) et la caméra (32) sont situées de part et d'autre du palpeur mécanique, de sorte que celui-ci ne se trouve pas dans le champ de vision de la caméra (32) ni dans le champ du faisceau laser (311) issu de la source laser (31) ces deux champs étant sécants. Ainsi, le palpeur mécanique (2) ne perturbe pas le fonctionnement du palpeur optique (3) permettant ainsi un fonctionnement simultané des palpeurs.

Lorsque le palpeur mixte selon l'invention est en fonctionnement, la source laser (31) émet un faisceau laser (311) lequel entre en contact avec la matière constitutive de la pièce à numériser. Quand le faisceau laser entre en contact avec la pièce à numériser, la matière constitutive de la pièce va diffuser une partie de la lumière émise par la source laser (31). C'est cette lumière diffusée que va percevoir la caméra (32). La matrice de la caméra (32) se trouve dans la partie du boîtier du palpeur mixte qui est inclinée, c'est pourquoi l'intersection de son champ de vision (321), qui a une forme pyramidale, avec le plan du faisceau laser (311) présente la forme d'un trapèze (33). La caméra (32) est positionnée sur le boîtier du palpeur mixte de façon à pouvoir récupérer au mieux le faisceau diffusé par la pièce numérisée. Le spot (5), situé dans le coude du boîtier du palpeur mixte, pe rmet à l'utilisateur de savoir si la partie de la pièce qu'il numérise se situe bien dans le champ de vision de la caméra (32) et donc de savoir si il récupère ou non de l'information. Le spot (5) est disposé de sorte à pouvoir remplir idéalement cette fonction. Simultanément à cette prise de mesure optique, le palpeur mécanique (2) numérise également la même portion de la pièce.

L'intérêt pour l'utilisateur d'utiliser le palpeur mixte selon l'invention réside dans le fait qu'il va pouvoir bénéficier des avantages de la numérisation optique (sa rapidité et sa maniabilité) et de ceux de la nu mérisation mécanique (sa précision). En effet, ceci est rendu possible par le fait que le palpeur mixte selon l'invention utilise un procédé de recalage du référentiel associé à l'image obtenue par le palpeur optique sur le référentiel associé à l'image obtenue par le palpeur mécanique pour un même objet numérisé. Les mesures effectuées par le palpeur mécanique étant plus précise que celles effectuées par le palpeur optique, il est possible de corriger l'image obtenue par le palpeur optique et d'en obtenir ainsi une plus précise bien qu'issue d'un palpeur optique. Comme il l'a été dit précédemment, les palpeurs optiques sont moins précis que les palpeurs mécaniques à cause la technologie même qu'ils utilisent. En effet, les palpeurs optiques utilisent une technologie discrète alors que les palpeurs mécaniques utilisent une technologie analogique. De plus, les palpeurs optiques enregistrent des pertes de précision notamment lors d'une étape de calibration (80) du palpeur optique au cours de la phase de fabrication. Toutefois, cette calibration "usine" permet d'identifier une matrice dite matrice de calibration (801). Cette matrice de calibration (801) permet de passer du référentiel de la caméra (32) où les coordonnées sont exprimées en pixels, dans un référentiel lié au palpeur mixte où les coordonnées sont exprimées dans les unités classiques des coordonnées mécaniques. Une fois sorti de l'usine, le palpeur mixte est installé sur son support (81) chez l'utilisateur. Lorsque celui-ci souhaite effectuer une mesure à l'aide du palpeur mixte selon l'invention, il doit procéder à un étalonnage (82, 83) des palpeurs optique (3) et mécanique (2). L'étalonnage des palpeurs optique et mécanique consiste en une mesure mixte, c'est à dire mécanique (85) et optique (84), d'une pièce ou d'un étalon qui est bien souvent une bille métallique. Cette mesure permet d'identifier une matrice de positionnement mécanique (830) qui exprime la position du palpeur mécanique (2) dans le référentiel lié à l'attache (4) et qui permet le passage du référentiel lié au centre de la bille (22) du palpeur mécanique (2) au référentiel lié à l'attache (4). Cette mesure donne également accès à une matrice dite de positionnement optique (823) qui exprime la positon du capteur optique (3) dans le référentiel lié à l'attache (4) et qui permet le passage entre le référentiel du capteur (3) et le référentiel lié à l'attache (4). A l'issue de l'étalonnage, l'utilisateur récupère deux images de l'étalon, l'une effectuée par le palpeur mécanique (2), l'autre effectuée par le palpeur optique. Les deux images représentent le même objet, il serait normal qu'elles se superposent parfaitement. Ce n'est pas le cas, car l'image issue du capteur optique (3) est un nuage de points de précision inférieure à celle de l'image issue du palpeur mécanique (2) qui est une reproduction presque à l'identique de la pièce qui a été numérisée. C'est pourquoi l'étape d'étalonnage ne donne pas un accès direct à la matrice de positionnement optique (823) celle-ci devant être corrigée afin de permettre le recalage de l'image optique sur l'image mécanique. Afin de pouvoir obtenir à terme un recalage de l'image optique par rapport à l'image mécanique, il faut procéder à une comparaison (820) des référentiels liés à l'étalon et déterminés par le palpeur mécanique (2) et par le palpeur optique (3). La comparaison des réfé rentiels s'effectue de façon simple selon des procédés connus : procédés isostatiques ou hyperstatiques, comme par exemple le procédé décrit ci-après. Afin de calculer le référentiel de l'étalon déterminé par le palpeur mécanique (2), trois points sont mesurés par lesquels passe un plan et un seul, deux points sont mesurés par lesquels passe une droite et une seule, enfin, un point est mesuré qui sert à bloquer le référentiel. Le plan et la droite permettent de définir une orientation et une direction dans le référentiel ce qui rend possible la comparaison avec un autre référentiel. Tous les points qui ont été placés dans le référentiel sont parfaitement définis puisqu'ils sont le produit d'un palpage mécanique. Dans le référentiel de l'étalon déterminé par le palpeur optique (3), un nuage de points sert à déterminer un plan, un autre nuage de points sert à déterminer une droite, et un petit groupe de points sert à déterminer le point de blocage du référentiel. Ici, le plan, la droite et le point de blocage sont déterminés avec moins de précision que lors du palpage mécanique, ceci est dû au fait que le palpage optique fourni un nuage de points et non pas une image plus précise de l'objet numérisé comme le fait un palpage mécanique. Dans le cas du référentiel obtenu par palpage optique, seules les positions moyennes du plan, de la droite et du point de blocage sont connues. Ce sont ces positions moyennes du plan, de la droite et du point de blocage obtenues par palpage optique qu'il faut recaler sur les positions, bien déterminées, du plan, de la droite, et du point de blocage du référentiel obtenues par palpage mécanique. La comparaison (820) des référentiels fourni une matrice dite matrice "correction optique " (821). La matrice "correction optique" (821) est l'outil qui permettra à l'utilisateur lors de la numérisation d'un objet, autre que l'étalon, de recaler le référentiel lié à l'image obtenue par le capteur optique (3) sur le référentiel lié à l'image obtenue par le palpeur mécanique (2) et ainsi de pouvoir obtenir une image à partir d'un palpeur optique qui possède une précision supérieure à celle qu'aurait fourni un palpeur optique classique. Une fois la matrice "correction optique" (321) identifiée, il est possible de choisir les corrections que l'on veut apporter à la matrice de positionnement optique, on peut par exemple choisir de recaler une direction de l'espace préférentiellement aux deux autres. Ceci constitue l'étape d'affinage (822) de la matrice de positionnement optique (823). Par un simple produit matriciel entre la matrice "correction optique" (821) et la matrice positionnement optique (823) obtenue à l'issue de l'étalonnage, il est possible d'obtenir la matrice positionnement optique corrigée. C'est cette matrice positionnement optique corrigée qui sera utilisée lors de la numérisation du prochain objet (86).

Les images de la pièce numérisée récupérées à l'issue de la mesure mixte (86), sont exprimées dans le référentiel de la machine tridimensionnelle. La machine tridimensionnelle connaît à chaque instant la position de l'attache (4) dans son référentiel dit "référentiel machine". La machine tridimensionnelle fourni donc une matrice "machine" qui exprime la position de l'attache dans le "référentiel machine" et qui permet le passage du référentiel lié à l'attache au référentiel lié à la machine. Un simple produit matriciel entre la matrice "machine" et la matrice de positionnement mécanique (830) permet d'obtenir les coordonnées de l'image dans le "référentiel machine" permettant ainsi à l'utilisateur de pouvoir exploiter les données issues de la numérisation de la pièce. En ce qui concerne les données issues du palpage optique, il faut dans un premier temps réaliser le produit de la matrice positionnement optique (823) par la matrice calibration (801). Ce produit permet le passage du référentiel de la caméra où les coordonnées sont exprimées en pixels au référentiel lié à l'attache (4) où les coordonnées sont exprimées en unités classiques. Dans un second temps, il faut réaliser le produit de la matrice résultat du produit précédent par la matrice "machine", ceci permet d'obtenir les coordonnées de l'image dans le "référentiel machine" permettant ainsi à l'utilisateur de pouvoir exploiter les données issues de la numérisation de la pièce. Les données exploitables par l'utilisateur sont déjà disponibles à l'issue des étapes d'étalonnage (82, 83).

Le palpeur selon l'invention allie un palpeur mécanique (2) à un capteur optique (3). Cette alliance permet à l'utilisateur soit de palper en mécanique soit de palper en optique. Si il décide de palper en optique, il pourra par le biais d'un procédé de recalage moyenner les pertes du palpeur optique. Il suffit pour cela de réaliser un palpage mixte, c'est à dire optique et mécanique, d'une même pièce dite étalon. En comparant les référentiels liés à l'étalon et obtenus par chacun des deux palpeurs, il sera possible de recaler le référentiel optique, issu d'un palpage moins précis, sur le référentiel mécanique, issu d'un palpage plus précis. En utilisant ce recalage, l'utilisateur du palpeur mixte selon l'invention pourra obtenir à l'issue d'un simple palpage optique une image plus proche de la réalité, plus précise, de la pièce numérisée que celle qu'il aurait obtenu avec un palpeur optique classique. Le palpeur selon l'invention offre, grâce à sa mixité et au procédé de recalage qui l'accompagne, une numérisation à la fois rapide et précise alliant ainsi les avantages de chacune des deux techniques de palpage que sont l'optique et le mécanique.

Il doit être évident, pour les personnes versées dans l'art, que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Annexe 1**

Otique :

$$\begin{bmatrix} x \\ y \\ z \end{bmatrix} = \begin{bmatrix} \text{Coordonnées de l'attache dans le référentiel de la machine} \end{bmatrix} \begin{bmatrix} \text{Coordonnées du capteur optique dans le référentiel de l'attache} \end{bmatrix} \begin{bmatrix} \text{Coordonnées pixels exprimées dans le référentiel du capteur optique} \end{bmatrix} \begin{bmatrix} \text{pixels} \end{bmatrix}$$

(823)      (801)

Mécanique :

$$\begin{bmatrix} x \\ y \\ z \end{bmatrix} = \begin{bmatrix} \text{Coordonnées de l'attache dans le référentiel de la machine} \end{bmatrix} \begin{bmatrix} \text{Coordonnées du centre de la bille du palpeur mécanique dans le référentiel de l'attache} \end{bmatrix} \begin{bmatrix} 0 \\ 0 \\ 0 \end{bmatrix}$$

(830)

**Revendications**

**1.** Palpeur mixte comportant:

- un boîtier (1) supportant un palpeur mécanique (2) à bille (22),
- un capteur optique (3) logé dans le boîtier (1) composé d'une source laser (31) dont le faisceau laser (311) est destiné à palper la pièce à numériser et d'une caméra (32) destinée à récupérer le faisceau diffusé par la matière de la pièce à numériser,
- une attache (4) destinée à être montée dans un moyen de fixation, l'attache (4) permet de fixer le palpeur selon l'invention sur une machine permettant des déplacements tridimensionnels,

**caractérisé en ce que** l'axe de révolution (42) de l'attache (4) passe par le centre de la bille (22), et **en ce que** le boîtier possède l'attache permettant de fixer le palpeur mixte sur une machine permettant des déplacements tridimensionnels, **en ce que** la source laser (31) et la caméra (32) se trouvent de part et d'autre du palpeur mécanique (2), la source laser (31) se situant dans la partie du boîtier (1) sensiblement perpendiculaire à l'axe de l'attache (42) et la caméra (32) se situant dans la partie inclinée du boîtier (1) du palpeur mixte; **en ce que** le palpeur mécanique (2) ne se trouve pas dans le champ de vision de la caméra (32) permettant le fonctionnement simultané du palpeur mécanique (2) et du capteur optique (3).

2. Palpeur mixte selon la revendication 1, **caractérisé en ce que** la position du centre de la bille (22) du palpeur mécanique (2) par rapport à l'axe de révolution (42) de l'attache (4) est défini pour permettre des déplacements tridimensionnels pilotées par des logiciels de métrologie classiques conçus pour commander des palpeurs mécaniques dont l'axe de l'attachement qui porte le palpeur passe par le centre de la bille (22) du palpeur.

3. Palpeur mixte selon la revendication 1, **caractérisé en ce que** le plan laser (312) et l'axe optique sont sécants.

4. Palpeur mixte selon la revendication 1, **caractérisé en ce que** le palpeur mécanique (2) se situe dans une partie du boîtier (1) sensiblement perpendiculaire à l'axe de l'attache (42) l'autre partie du boîtier (1) formant un angle orienté en direction de la bille (22) du palpeur mécanique (2).

5. Palpeur mixte selon une des revendications 1 et 3 à 4 **caractérisé en ce que** la position de la caméra (32) dans le boîtier du palpeur mixte est déterminée de sorte que la lumière diffusée par la pièce à numériser vers la caméra provient d'une zone à l'intersection du champ de vision (321) de la caméra (32), avec le plan du faisceau laser (311).

6. Palpeur mixte selon la revendication 5, **caractérisé en ce que** un spot (5) est situé dans le coude du boîtier (1) du palpeur mixte dont le rôle est de guider l'utilisateur au cours de la mesure optique, le spot (5) étant positionné dans le champ de vision de la caméra.

7. Palpeur mixte selon la revendication 5, **caractérisé en ce que** l'intersection du champ de vision pyramidal de la caméra (32) avec le plan contenant le faisceau laser (311) forme un trapèze (33).

8. Palpeur mixte selon la revendication 1, **caractérisé en ce que** les câbles de transmission des mesures (6) du palpeur mécanique (2) sortent dans la partie supérieure du boîtier (1) du palpeur mixte et sont reliés à une électronique de contrôle de la machine qui supporte le palpeur.

9. Palpeur mixte selon la revendication 1, **caractérisé en ce que** l'axe de révolution (42) de l'attache (4) est parallèle et coplanaire avec l'axe de révolution d'un attachement cylindrique (21) ainsi qu'avec celui d'une touche (23).

10. Procédé de recalage pour palpeur mixte comportant

- un boîtier (1) supportant un palpeur mécanique (2) à bille (22),
- un capteur optique (3) logé dans le boîtier (1) composé d'une source laser (31) dont le faisceau laser (311) est destiné à palper la pièce à numériser et d'une caméra (32) destinée à récupérer le faisceau diffusé par la matière de la pièce à numériser,
- une attache (4) destinée à être montée dans un moyen de fixation, l'attache (4) permet de fixer le palpeur selon l'invention sur une machine permettant des déplacements tridimensionnels,

**caractérisé en ce que** l'axe de révolution (42) de l'attache (4) passe par le centre de la bille (22), **caractérisé en ce qu'**il comporte une étape de calibration (80) du capteur optique (3), une étape de mesure par le capteur optique (82) et par le palpeur mécanique (83) d'un objet étalon qui réalisent une étape d'étalonnage mixte, une boucle de recalage (820 à 823) des mesures du capteur optique par rapport aux mesures du capteur mécanique, une étape de mesure d'un autre objet (86) à partir d'un capteur optique après recalage du référentiel lié à l'image obtenue par le capteur optique sur le référentiel lié à l'image obtenue par le palpeur mécanique.

11. Procédé de recalage pour palpeur mixte selon la revendication 10, **caractérisé en ce que** l'étape de calibration (80) permet de récupérer une matrice dite matrice de calibration (801) qui permet de passer du référentiel de la caméra (32) au référentiel lié au palpeur mixte.

12. Procédé de recalage pour palpeur mixte selon une des revendications 10 ou 11, **caractérisé en ce que** l'étape d'étalonnage mixte consiste en une mesure par le capteur optique (3) et par le palpeur mécanique (2) d'une pièce étalon, cette mesure permet de récupérer une matrice dite matrice de positionnement optique (823) qui permet de mesurer le référentiel de l'image optique par rapport au référentiel de l'attache (4), cette mesure permet également de récupérer une matrice dite matrice de positionnement mécanique (830) qui permet de mesurer le référentiel de l'image mécanique par rapport au référentiel de l'attache (4).

**13.** Procédé de recalage pour palpeur mixte selon la revendication 12, **caractérisé en ce que** la boucle de recalage comprend une étape de comparaison (820), une étape d'affinage (822).

**14.** Procédé de recalage selon la revendication 13, **caractérisé en ce que** l'étape de comparaison (820) consiste en une comparaison des référentiels liés à chacune des images, optique et mécanique, de l'étalon.

**15.** Procédé de recalage pour palpeur mixte selon la revendication 14, **caractérisé en ce que** la comparaison des référentiels se fait, par le biais d'un procédé isostatique ou hyperstatique.

**16.** Procédé de recalage pour palpeur mixte selon une des revendications 14 ou 15, **caractérisé en ce que** la comparaison (820) permet de récupérer une matrice dite matrice correction optique (821) qui permet le recalage du référentiel lié à l'image obtenue par le capteur optique (3) sur celui lié à l'image obtenue par le palpeur mécanique (2).

**17.** Procédé de recalage pour palpeur mixte selon la revendication 13 **caractérisé en ce que** l'étape d'affinage (822) permet de corriger la matrice positionnement optique (823) à l'aide de la matrice correction optique (821), au cours de cette étape, l'utilisateur peut choisir dans quelle mesure il veut recaler la matrice de positionnement optique (823) et donc son image.

**18.** Procédé de recalage pour palpeur mixte selon une des revendications 10 à 17, **caractérisé en ce que** pour obtenir les coordonnées de l'image numérisée au cours de l'étape de mesure (85) dans le référentiel de la machine tridimensionnelle pour en simplifier le traitement, il faut procéder à un produit matriciel entre la matrice de positionnement mécanique (830) ou optique (823) et une matrice dite matrice machine, cette matrice machine est fournie par la machine tridimensionnelle et permet de passer du référentiel lié à l'attache (4) à celui lié à la machine tridimensionnelle.

**Patentansprüche**

**1.** Mischfühler, aufweisend:

- ein Gehäuse (1), das einen mechanischen Fühler (2) mit Kugel (22) trägt,
- einen optischen Sensor (3), der in dem Gehäuse (1) aufgenommen ist, bestehend aus einer Laserquelle (31), deren Laserstrahl (311) zum Abtasten des zu digitalisierenden Teils bestimmt ist, und einer Kamera (32), die zum Zurückgewinnen des von dem Stoff des zu digitalisierenden Stücks verteilten Strahls bestimmt ist, und
- ein Befestigungselement (4), das zum Montieren in einem Befestigungsmittel bestimmt ist, wobei das Befestigungselement (4) das Befestigen des Fühlers gemäß der Erfindung an einem Gerät ermöglicht, das dreidimensionale Bewegungen ermöglicht,

**dadurch gekennzeichnet, dass** die Umdrehungsachse (42) des Befestigungselements (4) durch das Zentrum der Kugel (22) hindurchverläuft, dass das Gehäuse das Befestigungselement hat, das das Befestigen des Fühlers an einem Gerät ermöglicht, das dreidimensionale Bewegungen ermöglicht, dass sich die Laserquelle (31) und die Kamera (32) auf beiden Seiten des mechanischen Fühlers (2) befinden, wobei die Laserquelle (31) in dem Teil des Gehäuses (1) positioniert ist, der im Wesentlichen senkrecht zu der Achse des Befestigungselements (42) ist, und die Kamera (32) in dem geneigten Teil des Gehäuses (1) des Mischfühlers positioniert ist und, dass sich der mechanische Fühler (2) nicht im Sichtfeld der Kamera (32) befindet, wodurch das gleichzeitige Funktionieren des mechanischen Fühlers (2) und des optischen Sensors (3) ermöglicht wird.

**2.** Mischfühler gemäß Anspruch 1, **dadurch gekennzeichnet, dass** die Position des Zentrums der Kugel (22) des mechanischen Fühlers (2) relativ zu der Umdrehungsachse (42) des Befestigungselements (4) so definiert ist, dass dreidimensionale Bewegungen ermöglicht werden, die mittels herkömmlicher Metrologie-Software gesteuert werden, die zum Steuern von mechanischen Fühlern vorgesehen ist, deren Befestigungsachse, die den Fühler trägt, durch das Zentrum der Kugel (22) des Fühlers hindurchverläuft.

**3.** Mischfühler gemäß Anspruch 1, **dadurch gekennzeichnet, dass** sich die Laser-Ebene (312) und die optische Achse schneiden.

**4.** Mischfühler gemäß Anspruch 1, **dadurch gekennzeichnet, dass** der mechanische Fühler (2) in einem Teil des Gehäuses (1) positioniert ist, der im Wesentlichen senkrecht zu der Achse des Befestigungselements (42) ist, wobei der andere Teil des Gehäuses (1) einen Winkel bildet, der in Richtung zu der Kugel (22) des mechanischen Fühlers (2) ausgerichtet ist.

5. Mischfühler gemäß einem der Ansprüche 1 und 3 bis 4, **dadurch gekennzeichnet, dass** die Position der Kamera (32) in dem Gehäuse des Mischfühlers derart bestimmt ist, dass das Licht, das von dem zu digitalisierenden Teil in Richtung zu der Kamera ausgestrahlt wird, aus einem Bereich an der Schnittstelle des Sichtfeldes (321) der Kamera (32) mit der Ebene des Laserstrahls (311) stammt.

6. Mischfühler gemäß Anspruch 5, **dadurch gekennzeichnet, dass** ein Lichtpunkt (5) im Krümmungsabschnitt (1) des Mischfühlers positioniert ist, dessen Rolle das Führen des Benutzers während der optischen Messung ist, wobei der Lichtpunkt (5) dem Benutzer ermöglicht, zu erkennen, ob das Teil, das er digitalisiert, sich korrekt in dem Sichtfeld der Kamera befindet.

7. Mischfühler gemäß Anspruch 5, **dadurch gekennzeichnet, dass** die Schnittstelle des pyramidalen Sichtfeldes der Kamera (32) mit der den Laserstrahl (311) enthaltenden Ebene ein Trapez (33) bildet.

8. Mischfühler gemäß Anspruch 1, **dadurch gekennzeichnet, dass** die Leitungen zum Übertragen der Messungen (6) des mechanischen Fühlers (2) in dem oberen Teil des Gehäuses (1) des Mischfühlers austreten und an eine Steuerelektronik des Gerätes angeschlossen sind, das den Fühler trägt.

9. Mischfühler gemäß Anspruch 1, **dadurch gekennzeichnet, dass** die Umdrehungsachse (42) des Befestigungselements (4) parallel und koplanar zu der Umdrehungsachse eines zylinderförmigen Befestigungselements (21) sowie zu derjenigen einer Taste (23) ist.

10. Neueinstellungsverfahren für einen Mischfühler aufweisend: ein Gehäuse (1), das einen mechanischen Fühler (2) mit Kugel (22) trägt, einen optischen Sensor (3), der in dem Gehäuse (1) aufgenommen ist, bestehend aus einer Laserquelle (31), deren Laserstrahl (311) zum Abtasten des zu digitalisierenden Teils bestimmt ist, und einer Kamera (32), die zum Zurückgewinnen des von dem Stoff des zu digitalisierenden Stücks verteilten Strahls bestimmt ist, und ein Befestigungselement (4), das zum Montieren in einem Befestigungsmittel bestimmt ist, wobei das Befestigungselement (4) das Befestigen des Fühlers gemäß der Erfindung an einem Gerät ermöglicht, das dreidimensionale Bewegungen ermöglicht, wobei die Umdrehungsachse (42) des Befestigungselements (4) durch das Zentrum der Kugel (22) hindurchverläuft, **dadurch gekennzeichnet, dass** es aufweist: einen Schritt des Kalibrierens (80) des optischen Sensors (3), einen Schritt des Messens eines Musterobjekts mittels des optischen Sensors (82) und mittels des mechanischen Fühlers (83), die einen Schritt des gemischten Eichens durchführen, eine Schleife zur Neueinstellung (820 bis 923) der Messungen des optischen Sensors relativ zu den Messungen des mechanischen Sensors, und einen Schritt des Messens eines anderen Objekts (86) mittels des optischen Sensors, nachdem das Bezugssystem, das mit dem mittels des optischen Sensors erhaltenen Bild verknüpft ist, in Bezug zu dem Bezugssystem, das mit dem mittels des mechanischen Sensors erhaltenen Bild verknüpft ist, neueingestellt ist.

11. Neueinstellungsverfahren für einen Mischfühler gemäß Anspruch 10, **dadurch gekennzeichnet, dass** der Schritt des Kalibrierens (80) das Wiedergewinnen einer Matrix ermöglicht, die als Kalibrierungsmatrix (801) bezeichnet wird, die ein Wechseln von dem Bezugssystem der Kamera (32) zu dem mit dem Mischfühler verknüpften Bezugssystem ermöglicht.

12. Neueinstellungsverfahren für einen Mischfühler gemäß einem der Ansprüche 10 oder 11, **dadurch gekennzeichnet, dass** der Schritt des gemischten Eichens aus einem Messen mittels des optischen Sensors (3) und mittels des mechanischen Fühlers (2) eines Musterstücks besteht, wobei dieses Messen das Wiedergewinnen einer Matrix ermöglicht, die als optische Positionierungsmatrix (823) bezeichnet wird, die das Messen des Bezugssystems des optischen Bildes relativ zu dem Bezugssystem des Befestigungselements (4) ermöglicht, wobei dieses Messen ferner das Wiedergewinnen einer Matrix ermöglicht, die als mechanische Positionierungsmatrix (830) bezeichnet wird, die das Messen des Bezugssystems des mechanischen Bildes relativ zu dem Bezugssystem des Befestigungselements (4) ermöglicht.

13. Neueinstellungsverfahren für einen Mischfühler gemäß Anspruch 12, **dadurch gekennzeichnet, dass** die Neueinstellungsschleife einen Vergleichsschritt (820) und einen Verfeinerungsschritt (822) aufweist.

14. Neueinstellungsverfahren gemäß Anspruch 13, **dadurch gekennzeichnet, dass** der Vergleichsschritt (820) aus einem Vergleichen der Bezugssysteme besteht, die mit jedem der Bilder, optisch und mechanisch, des Musters verknüpft sind.

15. Neueinstellungsverfahren für einen Mischfühler gemäß Anspruch 14, **dadurch gekennzeichnet, dass** das Vergleichen der Bezugssysteme über ein isostatisches oder hyperstatisches Verfahren erfolgt.

16. Neueinstellungsverfahren für einen Mischfühler gemäß einem der Ansprüche 14 oder 15, **dadurch gekennzeichnet, dass** das Vergleichen (820) das Wiedergewinnen einer Matrix ermöglicht, die als optische Korrekturmatrix (821) bezeichnet wird, die das Neueinstellen des Bezugssystems, das mit dem mittels des optischen Sensors (3) erhaltenen Bild verknüpft ist, in Bezug zu dem, das mit dem mittels des mechanischen Fühlers (2) erhaltenen Bild verknüpft ist, ermöglicht.

17. Neueinstellungsverfahren für einen Mischfühler gemäß Anspruch 13, **dadurch gekennzeichnet, dass** der Verfeinerungsschritt (822) das Korrigieren der optischen Positionierungsmatrix (823) mit Hilfe der optischen Korrekturmatrix (821) ermöglicht, wobei der Benutzer während dieses Schrittes auswählen kann, in welchem Maß er die optische Positionierungsmatrix (823) und somit sein Bild einstellen möchte.

18. Neueinstellungsverfahren für einen Mischfühler gemäß einem der Ansprüche 10 bis 17, **dadurch gekennzeichnet, dass**, um die Koordinaten des digitalisierten Bildes während des Schrittes des Messens (85) in dem Bezugssystem der dreidimensionalen Maschine zu erhalten, um die Verarbeitung zu vereinfachen, ein Matrixprodukt zwischen der mechanischen (830) oder optischen (823) Positionierungsmatrix und einer als Gerätematrix bezeichneten Matrix erforderlich ist, wobei die Gerätematrix von dem dreidimensionalen Gerät bereitgestellt wird und ermöglicht, von dem Bezugssystem, das mit dem Befestigungselement (4) verknüpft ist, zu demjenigen zu wechseln, das mit dem dreidimensionalen Bild verknüpft ist.

## Claims

1. Mixed sensor comprising:

    - a housing (1) supporting a mechanical sensor (2) with a ball (22),
    - an optical sensor (3) accommodated in the housing (1) comprising a laser source (31) of which the laser beam (311) is intended to sense the part to be digitised and a camera (32) intended to recover the beam diffused by the material of the part to be digitised,
    - a fastener (4) intended to be mounted in a fixing means, the fastener (4) makes it possible to fix the sensor according to the invention on a machine which enables three-dimensional movements,

    **characterised in that** the axis of revolution (42) of the fastener (4) passes through the centre of the ball (22), **in that** the housing has the fastener that makes it possible to fix the mixed sensor on a machine which enables three-dimensional movements, **in that** the laser source (31) and the camera (32) are located on either side of the mechanical sensor (2), the laser source (31) being located in the part of the housing (1) substantially perpendicular to the axis of the fastener (42) and the camera (32) being located in the inclined part of the housing (1) of the mixed sensor, and **in that** the mechanical sensor (2) is not located in the field of view of the camera (32), enabling the simultaneous operation of the mechanical sensor (2) and of the optical sensor (3).

2. Mixed sensor as claimed in Claim I, **characterised in that** the position of the centre of the ball (22) of the mechanical sensor (2) relative to the axis of revolution (42) of the fastener (4) is defined in order to permit three-dimensional movements guided by conventional metrology software designed to control mechanical sensors of which the axis of the fastener bearing the sensor passes through the centre of the ball (22) of the sensor.

3. Mixed sensor as claimed in Claim 1, **characterised in that** the laser plane (312) and the optical axis are secants.

4. Mixed sensor as claimed in Claim 1, **characterised in that** the mechanical sensor (2) is located in a part of the housing (1) substantially perpendicular to the axis of the fastener (42), the other part of the housing (1) forming an angle oriented in the direction of the ball (22) of the mechanical sensor (2).

5. Mixed sensor as claimed in any one of Claims 1 and 3 to 4, **characterised in that** the position of the camera (32) in the housing of the mixed sensor is determined in such a way that the light diffused by the part to be digitised towards the camera originates from a zone at the intersection of the field of view (321) of the camera (32) with the plane of the laser beam (311).

6. Mixed sensor as claimed in Claim 5, **characterised in that** a spot (5) is situated in the bend in the housing (1) of the mixed sensor of which the purpose is to guide the user in the course of the optical measurement, the spot (5) enabling the user to know whether the part it digitises is located in the field of view of the camera.

7. Mixed sensor as claimed in Claim 5, **characterised in that** the intersection of the pyramidal field of view of the camera (32) with the plane containing the laser beam (311) forms a trapezium (33).

8. Mixed sensor as claimed in Claim 1, **characterised in that** the cables for transmission of the measurements (6) of the mechanical sensor (2) emerge in the upper part of the housing (1) of the mixed sensor and are connected to an electronic controller of the machine which supports the sensor.

9. Mixed sensor as claimed in Claim 1, **characterised in that** the axis of revolution (42) of the fastener (4) is parallel to and coplanar with the axis of revolution of a cylindrical attachment (21) and also that of a contact element (23).

10. Method of resetting for a mixed sensor comprising a housing (1) supporting a mechanical sensor (2) with a ball (22), an optical sensor (3) accommodated in the housing (1) comprising a laser source (31) of which the laser beam (311) is intended to sense the part to be digitised and a camera (32) intended to recover the beam diffused by the material of the part to be digitised, a fastener (4) intended to be mounted in a fixing means, the fastener (4) makes it possible to fix the sensor according to the invention on a machine which enables three-dimensional movements, the axis of revolution (42) of the fastener (4) passing through the centre of the ball (22),
**characterised in that** it includes a step of calibration (80) of the optical sensor (3), a step of measurement of a standard reference object by the optical sensor (82) and by the mechanical sensor (83) which produce a mixed calibration step, a loop (820 to 823) for resetting of the measurements from the optical sensor with respect to the measurements of the mechanical sensor, a measurement step of another object (86) from an optical sensor after the resetting of the reference system linked to the image obtained by the mechanical sensor.

11. Method of resetting for a mixed sensor as claimed in Claim 10, **characterised in that** the calibration step (80) makes it possible to recover a matrix known as a calibration matrix (801) which makes it possible to pass from the reference system of the camera (32) to the reference system linked to the mixed sensor.

12. Method of resetting for a mixed sensor as claimed in any one of Claims 10 or 11, **characterised in that** the mixed calibration step consists of a measurement by the optical sensor (3) and by the mechanical sensor (2) of a standard reference part, this measurement makes it possible to recover a matrix known as an optical positioning matrix (823) which makes it possible to measure the reference system of the optical image with respect to the reference system of the fastener (4), this measurement also makes it possible to recover a matrix known as a mechanical positioning matrix (830) which makes it possible to measure the reference system of the mechanical image with respect to the referential system of the fastener (4).

13. Method of resetting for a mixed sensor as claimed in Claim 12, **characterised in that** the resetting loop comprises a comparison step (820) and a refining step (822).

14. Method of resetting as claimed in Claim 13, **characterised in that** the comparison step (820) consists of a comparison of the reference systems linked to each of the images, optical and mechanical, of the standard reference part.

15. Method of resetting for a mixed sensor as claimed in Claim 14, **characterised in that** the comparison of the reference systems is made by means of an isostatic or hyperstatic process.

16. Method of resetting for a mixed sensor as claimed in any one of Claims 14 or 15, **characterised in that** the comparison (820) makes it possible to recover a matrix known as an optical correction matrix (821) which enables the resetting of the reference system linked to the image obtained by the optical sensor (3) on the reference system linked to the image obtained by the mechanical sensor (2).

17. Method of resetting for a mixed sensor as claimed in Claim 13, **characterised in that** the refining step (822) makes it possible to correct the optical positioning matrix (823) with the aid of the optical correction matrix (821), in the course of this step, the user can choose the measurement in which the optical positioning matrix (823) and therefore its image are to be reset.

18. Method of resetting for a mixed sensor as claimed in any one of Claims 10 to 17, **characterised in that** in order to obtain the co-ordinates of the digitised image in the course of the measurement step (85) in the reference system of the three-dimensional machine in order to simplify processing thereof, it is necessary to proceed to a matrix product between the mechanical (830) or optical (823) positioning matrix and a matrix known as the machine matrix, this machine matrix is provided by the three-dimensional machine and makes it possible to pass from the reference system linked to the fastener (4) to the reference system linked to the three-dimensional machine.

Figure 1

Figure 2

13

Figure 3

Figure 4

Figure 5

Figure 6